# EUROPÄISCHE PATENTSCHRIFT

(11) **EP 3 728 101 B1**
(45) Veröffentlichungstag und Bekanntmachung des Hinweises auf die Patenterteilung: **24.11.2021**
(21) Anmeldenummer: 18829212.2
(22) Anmeldetag: 05.12.2018
(51) Int. Cl.: B66F 9/22, B66F 9/075, F16H 59/18, F16H 61/456

(54) **BETRIEBSVERFAHREN EINES PERSONENGESTEUERTEN FLURFÖRDERZEUGS UND FLURFÖRDERZEUG**
OPERATING METHOD FOR AN OPERATOR-CONTROLLED INDUSTRIAL TRUCK, AND INDUSTRIAL TRUCK
PROCÉDÉ DE FONCTIONNEMENT D'UN CHARIOT DE MANUTENTION COMMANDÉ PAR UNE PERSONNE ET CHARIOT DE MANUTENTION

(30) Priorität: 22.12.2017 DE 102017131133
(43) Veröffentlichungstag der Anmeldung: 28.10.2020
(73) Patentinhaber: Hubtex Maschinenbau GmbH & Co. KG, 36041 Fulda (DE)
(72) Erfinder: OTTERBEIN, Michael, 36137 Großenlüder (DE)
(74) Vertreter: Kluin, Jörg-Eden
(86) Internationale Anmeldenummer: PCT/EP2018/083627
(87) Internationale Veröffentlichungsnummer: WO 2019/121014

(56) Entgegenhaltungen:
- GB-A- 1 467 759
- JP-A- H11 208 299
- US-A- 4 157 125

## Beschreibung

Die Erfindung betrifft ein Betriebsverfahren eines personengesteuerten Flurförderzeugs, mit einer mittels eines personenbetätigbaren Leistungssollwertgebers zum Zwecke der Beeinflussung der Fahrgeschwindigkeit leistungssteuerbaren Hydraulikpumpe zur Bereitstellung hydraulischer Leistung, mit zumindest zwei Antriebsrädern, die jeweils eine hydraulische, mittels der Hydraulikpumpe antreibbare Antriebseinheit umfassen, und mit einer Hydraulikeinrichtung, die zwischen einem ersten Schaltzustand, bei der die Antriebseinheiten fahrzustandsangepasst mit unterschiedlicher hydraulischer Leistung beaufschlagbar sind und einem zweiten Schaltzustand, bei der die Antriebseinheiten zwangsgesteuert mit hydraulischen Leistungen, die in einem bestimmten Verhältnis zueinander stehen, beaufschlagt werden, umschaltbar ist.

Die Erfindung betrifft darüber hinaus ein Flurförderzeug, mit einer mittels eines personenbetätigbaren Leistungssollwertgebers zum Zwecke der Beeinflussung der Fahrgeschwindigkeit leistungssteuerbaren Hydraulikpumpe zur Bereitstellung hydraulischer Leistung, mit zumindest zwei Antriebsrädern, jeweils eine hydraulische, mittels der Hydraulikpumpe antreibbare Antriebseinheit umfassen, und mit einer Hydraulikeinrichtung, die zwischen einem ersten Schaltzustand, bei der die Antriebseinheiten fahrzustandsangepasst mit unterschiedlicher hydraulischer Leistung beaufschlagbar sind, und einen zweiten Schaltzustand, bei der die Antriebseinheiten zwangsgesteuert mit Leistungen, die in einem bestimmten Verhältnis zueinander stehen, beaufschlagt werden, vorzugsweise elektrisch umschaltbar ist.

Bei den Flurförderzeugen kann es sich insbesondere um Fahrzeuge handeln, die zum Lastentransport und/oder Lastenhandling vorgesehen sind. Beispielhaft seien Hubfahrzeuge wie Gabelstapler genannt.

Derartige Fahrzeuge sind regelmäßig personengesteuert. Vielfach befindet sich hierzu ein Fahrer in einem am Fahrzeug vorgesehenen Bedienstand, von welchem aus meist sowohl die Fahrfunktionen, wie Lenken, Beschleunigen und Abbremsen, als auch weitere Funktionen des Fahrzeugs wie Anheben und Absenken einer Last etc. betätigt werden können.

Bei den Flurförderzeugen, auf die sich die Erfindung bezieht, handelt es sich um solche, die zumindest zwei Antriebsräder umfassen, die jeweils eine hydraulische, mittels einer motorisch angetriebenen Hydraulikpumpe antreibbare hydraulische Antriebseinheit umfassen. Um die Fahrgeschwindigkeit variieren zu können, weisen diese Flurförderzeuge mindestens einen personenbetätigbaren Leistungssollwertgeber auf, der oft als mit einem Fuß des Fahrers betätigbares Fahrpedal ausgebildet ist.

Aus der US 4 157 125 A ist beispielsweise ein Fahrzeug mit Allradantrieb und einer Antriebseinrichtung, die selbststätig auf den Steuerwinkel eines Steuerrads ansprechen, um sämtliche Räder zu lenken.

Derartige Flurförderzeuge müssen regelmäßig zum Betrieb in Lagerhallen, die teils mit dicht benachbarten Regalreihen bestückt sind, betrieben werden. Hierzu müssen die Flurförderzeuge besonders wendig sein, um Zeit kostende Rangiervorgänge möglichst zu vermeiden. Damit diese Flurförderzeuge um Kurven mit sehr kleinen Radien lenkbar sind, müssen die Antriebseinheiten mit unterschiedlichen hydraulischen Leistungen beaufschlagbar sein, die an den jeweiligen Fahrzustand angepasst sind. Hierzu weisen diese Fahrzeuge regelmäßig ein so genanntes "hydraulisches Differential" auf. Dieses ist im einfachsten Falle dadurch gebildet, dass der von der Hydraulikpumpe gelieferte Hydraulikstrom über einen Stromteiler den zumindest zwei Antriebseinheiten zugeführt wird. Ein größerer Hydraulikstrom fließt dann selbsttätig durch diejenige Antriebseinheit, die den geringeren hydraulischen Widerstand bereitstellt, d. h. diejenige, bei der sich das entsprechende Antriebsrad schneller dreht bzw. leichter drehen lässt.

Zwar sind Flurförderzeuge, die mit einem derartigen hydraulischen Differential ausgerüstet sind, in der Lage, enge Kurven auch ohne ein Radieren eines oder mehrerer Räder zu durchfahren. Es hat sich jedoch gezeigt, dass es bei derartigen Fahrzeugen - insbesondere beim Befahren mit nur geringer oder keiner Beladung - Fahrsituationen geben kann, bei denen sich durch dynamische Masseeffekte die Radlasten so verändern, dass es zu Schlupf an den Antriebsrädern kommen kann.

Um die Fahreigenschaften derartiger Flurförderzeuge verbessern zu können, ist es bereits bekannt, so genannte hydraulische Differentialsperren vorzusehen. Hierzu können diese Flurförderzeuge eine umschaltbare Hydraulikeinrichtung aufweisen, mittels welcher die Antriebseinheiten mit hydraulischen Leistungen in einem vorgegebenen Verhältnis, meistens im Verhältnis 1, d. h. mit derselben hydraulischen Leistung zwangsbetrieben werden. Aufgrund dieser Maßnahme kann die Traktion in einer Fahrsituation erhöht werden, in der der Fahrer vermutet, dass es zumindest bei einem der Antriebsräder zu einem Schlupf kommen könnte.

Ausgehend von diesem Stand der Technik liegt der vorliegenden Erfindung die Aufgabe zugrunde, das Fahrverhalten derartiger Flurförderzeuge zu verbessern und deren sichere Bedienbarkeit für einen Fahrer zu erleichtern.

Diese Aufgabe wird durch ein Betriebsverfahren gelöst, bei welchem bei Betätigung des Leistungssollwertgebers, beispielsweise des Fahrpedals, zumindest ein Betätigungsparameter erfasst wird. Zu diesen Betriebsparametern gehören insbesondere der mittels des Leistungssollwertgebers vorgegebene Absolutwert der Fahrleistung, im Falle eines Fahrpedals demnach beispielsweise die Fahrpedalstellung, sowie die Änderung des mittels des Leistungssollwertgebers vorgegebenen Leistungssollwerts als Funktion der Zeit, bei einem Fahrpedal demnach beispielsweise die Geschwindigkeit, mit welchem es vom Fahrer betätigt wird. Dieser mindestens eine Betätigungsparameter wird mit einem vorgegebenen Schwellenwert für diesen Betätigungsparameter verglichen und in Abhängigkeit des Ergebnisses dieses Vergleichs die Hydraulikeinrichtung automatisch von dem ersten in den zweiten Schaltzustand versetzt. Es versteht sich, dass auch weitere, einen Einfluss auf die von den Antriebseinrichtungen abgebenen Leistungen beeinflussende Befestigungsparameter erfasst und entsprechend ausgewertet werden können. Auch können mehrere Befestigungsparameter erfasst und ausgewertet werden.

Die hydraulische Differentialsperre wird demnach automatisch beispielsweise dann aktiviert, wenn das Fahrpedal über einen bestimmten Wert hinaus betätigt, beispielsweise niedergedrückt wird, und/oder das Fahrpedal unabhängig von der Länge der Betätigungsstrecke, beispielsweise des Niedertretens, mit einer oberhalb eines bestimmten Wertes liegenden Geschwindigkeit betätigt, beispielsweise niedergedrückt wird.

Es hat sich in der Praxis gezeigt, dass es dieses Betriebsverfahren dem Fahrer erleichtert, das Flurförderzeug sicher und gleichermaßen zügig zu fahren.

Bei einer bevorzugten Weiterbildung dieses Betriebsverfahrens bewirkt die Hydraulikschaltung den zweiten Schaltzustand für eine vorgegebene Dauer, beispielsweise im Bereich von 1 bis 15 Sekunden, nachdem der zumindest eine Betätigungsparameter den vorgegebenen Schwellenwert erreicht hat. Wird beispielsweise das Fahrpedal über den entsprechenden, vorgegebenen Schwellenwert hinaus niedergedrückt und in dieser Stellung über einen längeren Zeitraum gehalten, wie es beispielsweise bei einer längeren Geradeausfahrt der Fall sein kann, so wird aufgrund dieser bevorzugten Weiterbildung des Betriebsverfahrens nach Ablauf der vorgegebenen Dauer die Hydraulikschaltung wieder in den ersten Schaltzustand versetzt, d. h. die Differentialsperre aufgehoben. Aufgrund dieser Maßnahme wird vermieden, dass es bei der Einleitung einer Kurvenfahrt aus der Geradeausfahrt bei unverändertem Leistungssollwert, beispielsweise unveränderter Fahrpedalstellung, zu einem Radieren eines oder mehrerer Antriebsräder kommt.

Bei einer weiteren, bevorzugten Ausführungsform des erfindungsgemäßen Betriebsverfahrens ist die Hydraulikeinrichtung unabhängig von dem mindestens einen erfassten Betätigungsparameter von dem ersten in den zweiten Schaltzustand versetzbar. Die hydraulische Differentialsperre kann somit unabhängig von der Betätigung des Leistungssollwertgebers aktiviert werden, beispielsweise wenn der Fahrer absehen kann, dass für eine bevorstehende Fahrsituation unabhängig von der Antriebsleistung eine Fahrt bei aktivierter, hydraulischer Differentialsperre vorteilhaft ist. Beispielhaft seien für eine derartige Fahrsituation das Befahren einer Rampe, das Fahren über einen glatten Untergrund oder ein langsames Beschleunigen des Flurförderzeugs aus einer engen Kurve genannt.

Bei einer nochmals bevorzugten Weiterbildung des erfindungsgemäßen Flurförderzeugs wird der Lenkwinkel mindestens eines um eine Lenkachse lenkbaren Rads aus der Neutralstellung erfasst und die Fahrgeschwindigkeit selbsttätig lenkwinkelabhängig beeinflusst, beispielsweise umgekehrt proportional zum Lenkwinkel. Zwar erhöht sich durch diese Maßnahme insbesondere die Fahrsicherheit eines mit dem erfindungsgemäßen Betriebsverfahren betriebenen Flurförderzeugs. Da sich aber auch die Fahrsicherheit eines Flurförderzeugs, welches nicht die vorbeschriebene Funktion der automatischen Zuschaltung der hydraulischen Differentialsperre umfasst, wesentlich erhöhen lässt, kommt bereits einem Betriebsverfahren, bei welchem die Fahrgeschwindigkeit selbsttätig lenkwinkelabhängig beeinflusst wird, eine eigene erfinderische Bedeutung zu.

Bei dem erfindungsgemäßen Flurförderzeug ist die elektronische Steuereinrichtung derart ausgebildet, dass
- die Leistungsabgabe des motorischen Antriebs der Hydraulikpumpe und/oder die von der Hydraulikpumpe abgegebene hydraulische Leistung in Abhängigkeit der Betätigung des Leistungssollwertgebers erfolgt,
- mindestens ein Betätigungsparameter des Leistungssollwertgebers erfasst und mit einem Sollwert für diesen Betätigungsparameter verglichen wird, und
- in Abhängigkeit des Ergebnisses dieses Vergleichs die Hydraulikeinrichtung vorzugsweise für eine vorgegebene, begrenzte Dauer, besonders bevorzugt für etwa 1 bis 15 Sekunden, in den zweiten Schaltzustand umgeschaltet wird, in dem die Antriebseinheiten mit Leistungen zwangsbeaufschlagt sind, die in einem bestimmten Verhältnis zueinander stehen, insbesondere in einem Verhältnis von etwa 1, d. h. sämtlich mit etwa derselben Leistung.

Bei einer besonders bevorzugten Weiterbildung dieses erfindungsgemäßen Flurförderzeugs ist an die elektronische Steuereinrichtung eine Betätigungseinrichtung angeschlossen und die elektronische Steuereinrichtung ist vorzugsweise derart ausgebildet, dass eine Betätigung der Betätigungseinrichtung in den zweiten Schaltzustand der Hydraulikeinrichtung, d. h. die Aktivierung der hydraulischen Differentialsperre bewirkt. Aufgrund dieser Maßnahme kann - wie bereits oben erläutert - der Fahrer das erfindungsgemäße Flurförderzeug auch mit einer aktivierten hydraulischen Differentialsperre betreiben, wenn er dies für den Fahrzustand als vorteilhaft erachtet, die hydraulische Differentialsperre aufgrund der momentanen Betätigungsparameter aber nicht aktiviert ist.

Bei einerseits besonders bevorzugten abermaligen Weiterbildung umfasst das erfindungsgemäße Fahrzeug mindestens ein um eine Lenkachse um einen Lenkwinkel lenkbares Rad und eine Einrichtung zur Erfassung des Lenkwinkels, die mit der elektronischen Steuereinrichtung verbunden ist, wobei die elektrische Steuereinrichtung derart ausgebildet ist, dass die Antriebsleistung der Hydraulikpumpe und/oder die von der Hydraulikpumpe abgegebene hydraulische Leistung selbsttätig lenkwinkelabhängig, insbesondere umgekehrt proportional zum Lenkwinkel aus einer Neutralstellung, beeinflusst wird.

Da diese Ausgestaltung unabhängig von der Möglichkeit der Aktivierung einer Differentialsperre bereits die Fahrsicherheit des Flurförderzeugs erhöht, kommt ihr unabhängige erfinderische Bedeutung zu.

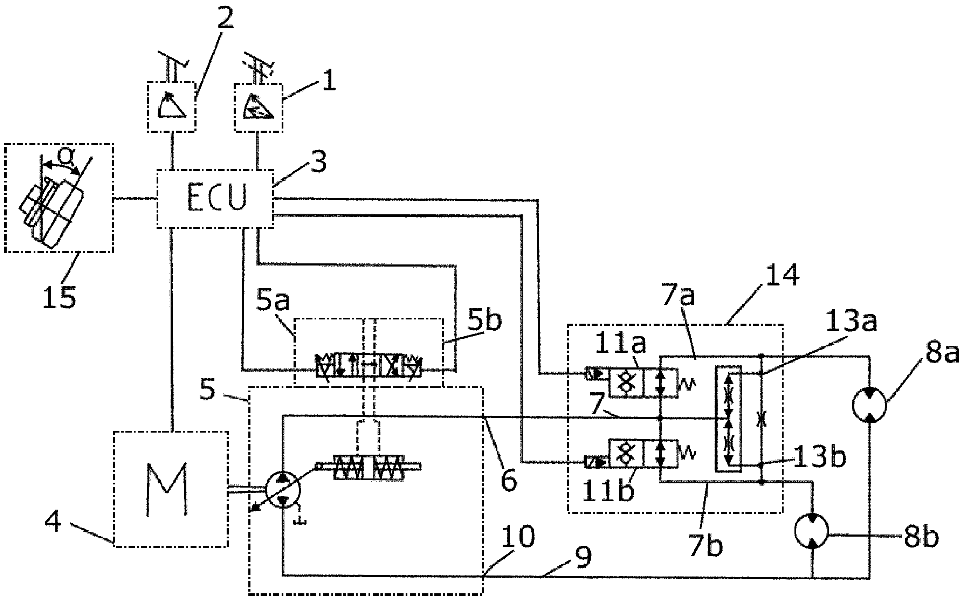

Ein Ausführungsbeispiel der Erfindung soll nachfolgend anhand der beigefügten Zeichnung, die - rein schematisch - einen Hydraulikplan dieses Ausführungsbeispiels zeigt, beschrieben werden:
Bei diesem Ausführungsbeispiel umfasst das Flurförderzeug einen elektrisch wirkenden Leistungssollwertgeber 1, beispielsweise in Form eines Fußpedals, welcher neben einer Betätigungseinrichtung 2 an eine elektrische Steuereinrichtung 3 angeschlossen ist.

Mit der elektrischen Steuereinrichtung 3 ferner verbunden ist ein Antriebsmotor 4 einer Hydraulikpumpe 5. Sie ist als elektrisch regelbare Verstellpumpe ausgebildet und umfasst zwei Stellmagnete 5a, 5b, mit welcher der von der Hydraulikpumpe erzeugte Hydraulikmedium-Vorderstrom veränderbar ist. Die Stellmagnetete 5a, 5b sind ebenfalls an die elektrische Steuereinrichtung 3 angeschlossen.

Bei dem Antriebsmotor 4 kann es sich um einen Rotationsmotor beliebiger Bauart, die eine Beeinflussung der Leistungsabgabe über die elektrische Steuereinrichtung erlaubt, handeln. Insbesondere kommt hier ein Elektro- oder Verbrennungsmotor in Betracht.

Die Hydraulikpumpe 5 weist einen ersten Hydraulikanschluss 6 auf, an den eine Zuleitung 7 angeschlossen ist. Über zwei Teilleitungen 7a, 7b ist die Zuleitung 7 mit jeweils einer Antriebseinheit 8a, 8b verbunden, die jeweils einen Hydromotor umfassen und jeweils mit einem in der Zeichnung nicht dargestellten Antriebsrad wirkverbunden sind. Die Teilleitungen 7a, 7b münden in eine Rückleitung 9, die mit einem zweiten Hydraulikanschluss 10 der Hydraulikpumpe 5 verbunden ist.

In die Teilleitungen 7a, 7b ist jeweils ein elektrisch betätigbares Zwei/ZweiWegeventil 11a, 11b eingeschaltet. Jedes der beiden Zwei/Zwei-Wegeventile 11a, 11b ist mit einer elektrischen Schalteinheit ausgerüstet, die ebenfalls elektrisch mit der elektrischen Steuereinrichtung verbunden ist.

Ferner ist an die Zuleitung 7 der Eingang eines Mengenteilers 12 angeschlossen. Er weist zwei Ausgänge 13a, 13b auf, die jeweils mit einer der Teilleitungen 7a, 7b verbunden sind.

In den in der Figur dargestellten ersten Schaltzustand kann der mit Hilfe der Hydraulikpumpe 5 erzeugte Volumenstrom an Hydraulikmedium durch die beiden Zwei/Zwei-Wegeventile 11a, 11b zu den Antriebseinheiten 8a, 8b gelangen. Da die beiden Teilleitungen 7a, 7b drosselfrei mit den Antriebseinheiten 8a, 8b und auch die Rückleitung 9 mit diesen gleichermaßen drosselfrei verbunden sind, kann der Volumenstrom des Hydraulikmediums gleichermaßen durch die eine oder die andere der Antriebseinheiten 8a, 8b fließen. Eine die Zwei/Zwei-Wegeventile 11a, 11b umfassende Hydraulikeinrichtung 14 befindet sich somit in einem ersten Schaltzustand, in welchem die beiden Antriebseinheiten 8a, 8b mit Volumenströmen ein Hydraulikmedium beaufschlagt werden, deren Verhältnis zueinander sich selbsttätig an die durch den jeweiligen Fahrzustand bedingten Erfordernisse angepasst werden.

Um die Hydraulikeinrichtung 14 in einen Schaltzustand versetzen zu können, in welchem beide Antriebseinheiten 8a, 8b mit demselben Volumenstrom an Hydraulikmedium beaufschlagen zu können, lassen sich die beiden Zwei/Zwei-Wegeventile 11a, 11b mit Hilfe der elektronischen Steuereinrichtung 3 in einen Betriebszustand umschalten, indem sie die Teilleitungen 7a, 7b in beide Richtungen absperren. Das Hydraulikmedium wird in diesem Schaltzustand über die Zuleitung 7 dem Mengenteiler 12 zugeführt, der Teil der Hydraulikeinrichtung 14 ist. Über diesen Mengenteiler gelangen etwa die gleichen Mengen an Hydraulikmedium unter etwa dem gleichen Druck zu den Antriebseinheiten 8a, 8b, so dass diese etwa mit derselben Leistung beaufschlagt und das jeweils zugehörige Antriebsrad auch etwa mit derselben Leistung angetrieben wird. Der Umschaltvorgang der beiden Zwei/Zwei-Wegeventile 11a, 11b erfolgt etwa dann, wenn der Leistungssollwertgeber 1 einen vorgegebenen Leistungssollwert erreicht hat. Dieser kann beispielsweise als erreicht gelten, wenn der Leistungssollwertgeber 1 in die in der Zeichnung gestrichelt dargestellte Position gebracht worden ist. Bei Erreichen dieses Schwellenwertes erfolgt die Umschaltung in den zweiten Schaltzustand, indem die Hydraulikeinrichtung 14 dann für eine vorgegebene Dauer, beispielsweise für 10 Sekunden, verbleibt.

Unabhängig davon, ob mit dem Leistungssollwertgeber ein Leistungssollwert zumindest in Höhe des Schwellenwerts vorgegeben ist, kann der Umschaltvorgang zwischen dem ersten und dem zweiten Schaltzustand durch Betätigung der Betätigungseinrichtung 2 erfolgen. In diesem Schaltzustand verbleibt die Hydraulikeinrichtung 14 dann zumindest für die Dauer der Betätigung der Betätigungseinrichtung 2.

Schließlich kann optional, wie in der Zeichnung dargestellt, an die elektrische Steuereinrichtung 3 eine Einrichtung 15 zur Erfassung eines Lenkwinkels α eines gelenkten Rades des Flurförderzeugs angeschlossen sein. Diese Einrichtung 15 bewirkt, dass die von der Hydraulikpumpe 5 abgegebene Leistung bei einem Lenkeinschlag aus einer Neutralstellung, die beispielsweise einer Geradeausfahrtrichtung des Flurförderzeugs entspricht, in Abhängigkeit des erfassten Lenkwinkels reduziert wird. Beispielsweise kann eine Reduzierung der Leistung in Abhängigkeit vom Lenkwinkel umgekehrt proportional erfolgen. Bei einem derart ausgebildeten Flurförderzeug wird somit die Leistung lenkwinkelabhängig automatisch reduziert, wodurch - auch unabhängig von der Möglichkeit einer hydraulischen Differentialsperre - die Fahrsicherheit erhöht wird.

### Bezuaszeichenliste:

- 1: Leistungssollwertgeber
- 2: Betätigungseinrichtung
- 3: elektrische Steuereinrichtung
- 4: Antriebsmotor
- 5: Hydraulikpumpe
- 5a, 5b: Steuermagnete
- 6: erster Hydraulikanschluss
- 7: Zuleitung
- 7a, 7b: Teilleitungen
- 8a, 8b: Antriebseinheiten
- 9: Rückleitung
- 10: zweiter Hydraulikanschluss
- 11a, 11b: Zwei/Zwei-Wegeventil
- 12: Mengenteiler
- 13a, 13b: Ausgänge
- 14: Hydraulikeinrichtung
- 15: Einrichtung zur Erfassung des Lenkwinkels
- α: Lenkwinkel

## Patentansprüche

1. Betriebsverfahren eines personengesteuerten Flurförderzeugs,
mit einer mittels eines personenbetätigbaren Leistungssollwertgebers (1) zum Zwecke der Beeinflussung der Fahrgeschwindigkeit leistungssteuerbaren Hydraulikpumpe (5) zur Bereitstellung hydraulischer Leistung,
mit zumindest zwei Antriebsrädern, die jeweils eine hydraulische, mittels der Hydraulikpumpe (5) antreibbare Antriebseinheit (8a, 8b) umfassen,
und mit einer Hydraulikeinrichtung (14), die zwischen einem ersten Schaltzustand, in dem Antriebseinheiten (8a, 8b) fahrzustandsangepasst mit unterschiedlichen hydraulischen Leistungen beaufschlagbar sind, und einem zweiten Schaltzustand, bei der die Antriebseinheiten (8a, 8b) zwangsgesteuert mit hydraulischen Leistungen, die in einem bestimmten Verhältnis zueinander stehen, beaufschlagt werden, umschaltbar ist,
**dadurch gekennzeichnet,**
**dass** zumindest ein Betätigungsparameter des Leistungssollwertgebers (1) erfasst wird, dieser Betätigungsparameter mit einem vorgegebenen Schwellenwert verglichen wird und in Abhängigkeit dieses Vergleichs die Hydraulikeinrichtung (14) von dem ersten in den zweiten Schaltzustand versetzt wird.

2. Betriebsverfahren nach Anspruch 1, **dadurch gekennzeichnet, dass** die Hydraulikeinrichtung (14) für eine vorgegebene Dauer in den zweiten Schaltzustand versetzt wird.

3. Betriebsverfahren nach Anspruch 1 oder 2, **dadurch gekennzeichnet, dass** der zumindest eine Betriebsparameter den mittels des Leistungssollwertgebers (1) vorgegebenen Absolutwert umfasst.

4. Betriebsverfahren nach einem der Ansprüche 1 bis 3, **dadurch gekennzeichnet, dass** der zumindest eine Betriebsparameter die Änderung des mittels des Leistungssollwertgebers (1) vorgegebenen Leistungssollwert als Funktion der Zeit umfasst.

5. Betriebsverfahren nach einem der Ansprüche 1 bis 4, **dadurch gekennzeichnet, dass** die Hydraulikeinrichtung (14) unabhängig von dem mindestens einen erfassten Parameter von dem ersten in den zweiten Schaltzustand versetzbar ist.

6. Betriebsverfahren nach einem der Ansprüche 1 bis 5, **dadurch gekennzeichnet, dass** das Verhältnis, in dem die Leistungen, mit denen die mindestens zwei Antriebseinheiten beaufschlagt werden, 1 beträgt.

7. Betriebsverfahren nach einem der Ansprüche 1 bis 6, wobei das Flurförderzeug mindestens ein um eine Lenkachse um Lenkwinkel (a) lenkbares Rad umfasst und der Lenkwinkel erfasst wird, **dadurch gekennzeichnet, dass** die Fahrgeschwindigkeit selbsttätig lenkwinkelabhängig beeinflusst, vorzugsweise bei einer Vergrößerung des Lenkwinkels aus einer Geradeausstellung umgekehrt proportional reduziert wird.

8. Flurförderzeug,
mit einer mittels eines personenbetätigbaren Leistungssollwertgebers (1) zum Zwecke der Beeinflussung der Fahrgeschwindigkeit leistungssteuerbaren, einen Antriebsmotor (4) aufweisenden Hydraulikpumpe (5) zur Bereitstellung hydraulischer Leistung,
mit zumindest zwei Antriebsrädern, die jeweils eine hydraulische, mittels der Hydraulikpumpe (5) antreibbare Antriebseinheit (8a, 8b) umfassen, und mit einer Hydraulikeinrichtung (14), die zwischen einem ersten Schaltzustand, in dem die Antriebseinheiten (8a, 8b) Fahrzustand angepasst mit unterschiedlichen hydraulischen Leistung beaufschlagbar sind, und einem zweiten Schaltzustand, bei der die Antriebseinheiten (8a, 8b) zwangsgesteuert mit Leistungen, die in einem bestimmten Verhältnis zueinander stehen, beaufschlagt werden, umschaltbar ist,
**dadurch gekennzeichnet,**
**dass** eine elektronische Steuereinrichtung (3) vorgesehen ist, an die eine Leistungsregelungseinrichtung des Antriebsmotors (4) der Hydraulikpumpe (5) und/oder die Hydraulikpumpe (5) sowie die elektrisch umschaltbare Hydraulikeinrichtung (14) angeschlossen sind, wobei die elektronische Steuereinrichtung (3) derart ausgebildet ist, dass
- der Antriebsmotor (4) und/oder die Hydraulikpumpe (5) in Abhängigkeit der Betätigung des Leistungssollwertgebers (1) leistungsgesteuert werden,
- mindestens ein Betätigungsparameter des Leistungssollwertgebers (1) erfasst und mit einem Sollwert für diesen Betätigungsparameter verglichen wird, und
- in Abhängigkeit des Ergebnisses dieses Vergleichs die Hydraulikeinrichtung (14) vorzugsweise für eine vorgegebene, begrenzte Dauer vom ersten in den zweiten Schaltzustand umgeschaltet wird.

9. Flurförderzeug nach Anspruch 8, **dadurch gekennzeichnet, dass** an die elektronische Steuereinrichtung (3) eine Betätigungseinrichtung (2) angeschlossen und die elektronische Steuereinrichtung (3) derart ausgebildet ist, dass eine Betätigung der Betätigungseinrichtung (2) den zweiten Schaltzustand der Hydraulikeinrichtung (14) bewirkt.

10. Flurförderzeug mit mindestens einem um eine Lenkachse um Lenkwinkel (a) lenkbaren Rad und mit einer Einrichtung zur Erfassung des Lenkwinkels (a), vorzugsweise nach Anspruch 8 oder 9, **dadurch gekennzeichnet, dass** die Einrichtung zur Erfassung des Lenkwinkels (a) mit der elektronischen Steuereinrichtung (3) verbunden und diese derart ausgebildet ist, dass die Antriebsleistung des Antriebsmotors (4) der Hydraulikpumpe (5) und/oder die von der Hydraulikpumpe (5) abgegebene hydraulische Leistung selbsttätig lenkwinkelabhängig beeinflusst werden.

## Claims

1. Operating method for a person-controlled industrial truck,
comprising a hydraulic pump (5) for providing hydraulic power, which pump can be power-controlled by means of a person-actuated power setpoint generator (1) for the purpose of influencing the driving speed,
comprising at least two drive wheels, each of which comprises a hydraulic drive unit (8a, 8b) that can be driven by means of the hydraulic pump (5),
and comprising a hydraulic device (14) which can be switched between a first switching state, in which the drive units (8a, 8b) can be supplied with different hydraulic power levels depending on the driving situation, and a second switching state, in which the drive units (8a, 8b) are supplied, using positive control, with hydraulic power levels that are in a particular ratio to one another,
**characterized in that**
at least one actuation parameter of the power setpoint generator (1) is detected, this actuation parameter is compared with a predetermined threshold value and the hydraulic device (14) is switched from the first to the second switching state on the basis of this comparison.

2. Operating method according to claim 1, **characterized in that** the hydraulic device (14) is switched to the second switching state for a predetermined period.

3. Operating method according to either claim 1 or claim 2, **characterized in that** the at least one operating parameter comprises the absolute value predetermined by means of the power setpoint generator (1).

4. Operating method according to any of claims 1 to 3, **characterized in that** the at least one operating parameter comprises the change to the power setpoint specified by means of the power setpoint generator (1) as a function of time.

5. Operating method according to any of claims 1 to 4, **characterized in that** the hydraulic device (14) can be switched from the first to the second switching state independently of the at least one detected parameter.

6. Operating method according to any of claims 1 to 5, **characterized in that** the ratio in which the power levels with which the at least two drive units are supplied is 1.

7. Operating method according to any of claims 1 to 6, the industrial truck comprising at least one wheel which can be steered about a steering axis at a steering angle (α) and the steering angle is detected, **characterized in that** the driving speed is automatically influenced depending on the steering angle, and is preferably reduced inversely proportionally when the steering angle increases with respect to a straight-ahead position.

8. Industrial truck,
comprising a hydraulic pump (5) for providing hydraulic power, which pump has a drive motor (4) and can be power-controlled by means of a person-actuated power setpoint generator (1) for the purpose of influencing the driving speed,
comprising at least two drive wheels, each of which comprises a hydraulic drive unit (8a, 8b) that can be driven by means of the hydraulic pump (5), and comprising a hydraulic device (14) which can be switched between a first switching state, in which the drive units (8a, 8b) can be supplied with different hydraulic power levels depending on the driving situation, and a second switching state, in which the drive units (8a, 8b) are supplied, using positive control, with hydraulic power levels that are in a particular ratio to one another,
**characterized in that**
an electronic control device (3) is provided to which a power control device of the drive motor (4) of the hydraulic pump (5) and/or the hydraulic pump (5) and the electrically switchable hydraulic device (14) are connected, the electronic control device (3) being designed such that
- the drive motor (4) and/or the hydraulic pump (5) are power-controlled depending on the actuation of the power setpoint generator (1),
- at least one actuation parameter of the power setpoint generator (1) is detected and compared with a setpoint for this actuation parameter, and
- depending on the result of this comparison, the hydraulic device (14) is switched from the first to the second switching state, preferably for a predetermined, limited period.

9. Industrial truck according to claim 8, **characterized in that** an actuation device (2) is connected to the electronic control device (3) and the electronic control device (3) is designed in such a way that actuating the actuation device (2) causes the hydraulic device (14) to switch to the second switching state.

10. Industrial truck comprising at least one wheel that can be steered about a steering axis at a steering angle (α) and comprising a device for detecting the steering angle (α), preferably according to either claim 8 or claim 9, **characterized in that** the device for detecting the steering angle (α) is connected to the electronic control device (3) and this is designed in such a way that the drive power of the drive motor (4) of the hydraulic pump (5) and/or the hydraulic power output by the hydraulic pump (5) are automatically influenced depending on the steering angle.

## Revendications

1. Procédé de fonctionnement d'un chariot de manutention commandé par une personne,
comportant une pompe hydraulique (5) pour la fourniture d'une puissance hydraulique, laquelle pompe peut être contrôlée en puissance au moyen d'un ajusteur de valeur de consigne de puissance (1) actionnable, par une personne, aux fins de l'influence de la vitesse de déplacement,
comportant au moins deux roues motrices qui comprennent chacune respectivement une unité d'entraînement (8a, 8b) hydraulique pouvant être entraînée au moyen de la pompe hydraulique (5), et
comportant un dispositif hydraulique (14) pouvant être commuté entre un premier état de commutation, dans lequel des unités d'entraînement (8a, 8b) peuvent être soumises à différentes puissances hydrauliques, en fonction de l'état de déplacement, et un second état de commutation, dans lequel les unités d'entraînement (8a, 8b) sont soumises, par commande forcée, à des puissances hydrauliques qui se trouvent dans un rapport déterminé les unes par rapport aux autres,
**caractérisé en ce**
**qu'**au moins un paramètre d'actionnement de l'ajusteur de valeur de consigne de puissance (1) est détecté, lequel paramètre d'actionnement est comparé à une valeur de seuil prédéfinie et, en fonction de cette comparaison, le dispositif hydraulique (14) est déplacé du premier au second état de commutation.

2. Procédé de fonctionnement selon la revendication 1, **caractérisé en ce que** le dispositif hydraulique (14) est déplacé dans le second état de commutation pendant une durée prédéfinie.

3. Procédé de fonctionnement selon la revendication 1 ou 2, **caractérisé en ce que** l'au moins un paramètre de fonctionnement comprend la valeur absolue prédéfinie au moyen de l'ajusteur de valeur de consigne de puissance (1).

4. Procédé de fonctionnement selon l'une des revendications 1 à 3, **caractérisé en ce que** l'au moins un paramètre de fonctionnement comprend la modification de la valeur de consigne de puissance prédéfinie au moyen de l'ajusteur de valeur de consigne de puissance (1) en tant que fonction du temps.

5. Procédé de fonctionnement selon l'une des revendications 1 à 4, **caractérisé en ce que** le dispositif hydraulique (14) peut être déplacé du premier au second état de commutation indépendamment de l'au moins un paramètre détecté.

6. Procédé de fonctionnement selon l'une des revendications 1 à 5, **caractérisé en ce que** le rapport entre les puissances appliquées aux au moins deux unités d'entraînement est de 1.

7. Procédé de fonctionnement selon l'une des revendications 1 à 6, dans lequel le chariot de manutention comprend au moins une roue dirigeable autour d'un axe de direction par un angle de direction (a) et dans lequel l'angle de direction est détecté, **caractérisé en ce que** la vitesse de déplacement est automatiquement influencée en fonction de l'angle de direction, de préférence diminuée de manière inversement proportionnelle lorsque l'angle de direction est augmenté à partir d'une position droite.

8. Chariot de manutention,
comportant une pompe hydraulique (5) pour la fourniture d'une puissance hydraulique, laquelle pompe présente un moteur d'entraînement (4) et peut être contrôlée en puissance au moyen d'un ajusteur de valeur de consigne de puissance (1) actionnable par une personne, aux fins de l'influence de la vitesse de déplacement,
comportant au moins deux roues motrices, lesquelles comprennent chacune respectivement une unité d'entraînement (8a, 8b) hydraulique pouvant être entraînée par la pompe hydraulique (5), et comportant un dispositif hydraulique (14) qui peut être commuté entre un premier état de commutation, dans lequel les unités d'entraînement (8a, 8b) peuvent être soumises à différentes puissances hydrauliques, en fonction de l'état de déplacement, et un second état de commutation, dans lequel les unités d'entraînement (8a, 8b) sont soumises, par commande forcée, à des puissances qui se trouvent dans un rapport déterminé les unes par rapport aux autres,
**caractérisé en ce**
**qu'**un dispositif de commande électronique (3) est prévu, auquel un dispositif de régulation de puissance du moteur d'entraînement (4) de la pompe hydraulique (5) et/ou la pompe hydraulique (5) ainsi que le dispositif hydraulique (14) commutable électriquement sont connectés, le dispositif de commande électronique (3) étant conçu de manière à ce
- **que** le moteur d'entraînement (4) et/ou la pompe hydraulique (5) sont commandés en puissance lorsque l'ajusteur de valeur de consigne de puissance (1) est actionné,
- **qu'**au moins un paramètre d'actionnement de l'ajusteur de valeur de consigne de puissance (1) est détecté et comparé à une valeur de consigne pour ledit paramètre d'actionnement, et
- **que**, en fonction du résultat de ladite comparaison, le dispositif hydraulique (14) est commuté du premier au second état de commutation, de préférence pour une durée prédéfinie limitée.

9. Chariot de manutention selon la revendication 8, **caractérisé en ce qu'**un dispositif d'actionnement (2) est connecté au dispositif de commande électronique (3), et le dispositif de commande électronique (3) est conçu de manière à ce qu'un actionnement du dispositif d'actionnement (2) induit le second état de commutation du dispositif hydraulique (14).

10. Chariot de manutention comportant au moins une roue dirigeable autour d'un axe de direction par un angle de direction (α) et comportant un dispositif permettant la détection de l'angle de direction (α), de préférence selon la revendication 8 ou 9, **caractérisé en ce que** le dispositif permettant la détection de l'angle de direction (α) est connecté au dispositif de commande électronique (3) et celui-ci est conçu de manière à ce que la puissance d'entraînement du moteur d'entraînement (4) de la pompe hydraulique (5) et/ou la puissance hydraulique délivrée par la pompe hydraulique (5) sont automatiquement influencées en fonction de l'angle de direction.
